**Europäisches Patentamt**

**European Patent Office**

**Office européen des brevets**

(19)

(11) Veröffentlichungsnummer: **0 016 330**
**B1**

(12) # EUROPÄISCHE PATENTSCHRIFT

(45) Veröffentlichungstag der Patentschrift:
06.07.83

(51) Int. Cl.³: **B 25 J 11/00**

(21) Anmeldenummer: **80100621.4**

(22) Anmeldetag: **07.02.80**

(54) Manipulatoranordnung mit einer Einrichtung zur Kompensation der Schwerkraftwirkung.

(30) Priorität: **19.03.79 US 21647**

(43) Veröffentlichungstag der Anmeldung:
**01.10.80 Patentblatt 80/20**

(45) Bekanntmachung des Hinweises auf die Patenterteilung:
**06.07.83 Patentblatt 83/27**

(84) Benannte Vertragsstaaten:
**CH DE FR GB**

(56) Entgegenhaltungen:
**EP-A-0 009 736**
**DE-A-2 245 866**
**DE-A-2 513 309**
**DE-A-2 626 397**
**DE-A-2 801 348**
**US-A-3 827 333**

(73) Patentinhaber: **International Business Machines Corporation, Armonk, N.Y. 10504 (US)**

(72) Erfinder: **Panissidi, Hugo Anthony, 228 Buttonwood Avenue, Peekskill, New York 10566 (US)**

(74) Vertreter: **Möhlen, Wolfgang C., Dipl.-Ing., Säumerstrasse 4, CH-8803 Rüschlikon (CH)**

## Manipulatoranordnung mit einer Einrichtung zur Kompensation der Schwerkraftwirkung

Die vorliegende Erfindung betrifft eine Manipulatoranordnung mit einer Greifarmvorrichtung zum Ergreifen von Objekten, und mit einer Einrichtung zur Kompensation der Schwerkraftwirkung.

Manipulatorsysteme mit Greifarmen sind schon bekannt, z. B. aus dem CH-A-605 050. Bei diesem System können drei Armsegmente durch Einzelantriebe orthogonal zueinander bewegt werden. Wenn das System in Betrieb ist und wenn die Antriebsmotoren laufen, wirkt auf mindestens ein Armsegment ständig die Schwerkraft ein und sollte kompensiert werden. Auch bei stillstehendem Motor für die vertikale Armbewegungsrichtung versucht die Schwerkraft das betreffende Armsegment nach unten zu verschieben, was auf jeden Fall verhindert werden soll.

Es sind schon Maßnahmen zur Bereitstellung von Gegenkräften gegen die Schwergewichtswirkung bei Manipulatorsystemen bekannt geworden. Im US-A-3 661 276 wird eine Anordnung beschrieben, welche für diesen Zweck Gegengewichte vorsieht. Die Benutzung von Gewichten und Gegenmassen ist aber ungünstig, weil dadurch erhebliche Massen zusätzlich ins System kommen. Die Gegengewichte sind nicht nur lästig, sondern es braucht auch zusätzliche Antriebsenergie, um diese Massen zu beschleunigen. Gegengewichte benötigen überdies zusätzlichen Platz, und bedingen weiterhin erhebliche Systementwurfsänderungen, um die geänderten Belastungen zu berücksichtigen.

Eine weitere Möglichkeit zur Bereitstellung von Schwergewichts-Gegenkräften in Manipulator-Systemen ist die Benutzung von Gegenkraft-Federn, wie es im US-A-3 608 743 beschrieben ist. Die Benutzung von Gegenkraft-Federn ist aber ungünstig in Fällen, in denen eine konstante Gegenkraft unbedingt nötig ist, denn die Federn selbst erzeugen keine konstante Kraft.

Im übrigen können zur Verhinderung des Zusammenfallens von Greifarmvorrichtungen bei Manipulatoren Bremsen oder Druckluft-Klemmvorrichtungen vorgesehen werden, die den Greifarm in seiner Lage halten, wenn der Motor abgestellt ist. In diesen Systemen wird aber keine Gegenkraft erzeugt, wenn die Armbewegungsmotoren in Betrieb sind, und überdies muß die Wirkungsverzögerung, welche den Systemen mit Bremsen eigentümlich ist, kompensiert oder im Betrieb anders ausgeglichen werden.

Aus der DE-A-2 513 309 ist ein Handhabungsgerät bekannt, bei dem zur Schwerkraftentlastung eine Entlastungs-Vorrichtung mit hydraulisch oder pneumatisch ansteuerbarem Stellzylinder vorgesehen ist. Diese ist verstellbar in Abhängigkeit von dem Steuersignal des normalen Antriebsmotors. Es ist aber nicht gezeigt, auf welche Weise bei wechselnder Schwerkraftbelastung die zur genauen Kompensation jeweils notwendige wechselnde Ansteuerung erfolgt.

Die DE-A-2 626 397 beschreibt eine Werkzeugmaschine, bei der eine Kompensation des Durchhangs erfolgt, welcher bei einer langen Laufschiene durch das Gewicht eines Lufschlittens mit Werkzeugträger bewirkt wird. Diese Kompensation kann durch vorgespeicherte Werte gesteuert werden. Die Werte müssen aber durch einen Probelauf empirisch gewonnen werden. Außerdem erfolgt keine eigentliche Kompensation des Schwergewichts von Werkzeug und Halter, wie dies bei Manipulatoren mit Greifarmen nötig ist, sondern nur eine gegenläufige Verschiebung des Werkzeugs zum Ausgleich des Durchhangs.

In Manipulatorsystemen werden die Arme und Greiffinger wechselnd und erheblich belastet durch die Gewichte der verschiedenen Werkzeuge wie z. B. Schraubendreher, Nietvorrichtungen, Lötkolben, Schweißbrenner u. dgl. Diese Belastungen können wesentliche Werte annehmen, wodurch sich Fehler im Betrieb des Antriebsservosystems ergeben können. Wenn z. B. die Kompensationskraft für eine unbelastete Greifarmvorrichtung auf ca. 300 N eingestellt wurde, und dann während des Arbeitsprogramms ein 150 N schweres Werkzeug von den Greiffingern erfaßt werden muß, könnte dieser Veränderung des Ausgleichs ausreichen, um die Stabilität des mechanischen Antriebssystems erheblich zu stören. Es ist deshalb wünschenswert, eine Möglichkeit zur Anpassung der Kompensationskraft an die unterschiedlichen Gewichte der verschiedenen Werkzeuge zu haben.

Der Erfindung liegt die Aufgabe zugrunde, für eine Manipulatoranordnung eine Einrichtung zur Kompensation der Schwergewichtskräfte anzugeben, welche eine konstante Gegenkraft erzeugt, und mittels welcher vor allem bei Veränderung der Schwergewichtskraft, z. B. infolge Aufnahme unterschiedlicher Werkzeuge, die erzeugte Gegenkraft entsprechend angepaßt werden kann.

Die erfindungsgemäße Lösung dieser Aufgabe ist im Patentanspruch 1 angegeben, und in den übrigen Patentansprüchen sind vorteilhafte Ausgestaltungen der Erfindung aufgeführt.

Die erfindungsgemäße Lösung nutzt den Vorteil, daß die Steuerung zur Einstellung einer konstanten oder veränderlichen Gegenkraft separat von der eigentlichen Greifarmvorrichtung ist, während die mit dieser verbundenen Teile ein minimales Gewicht haben, und daß die eigentliche Gegenkraft durch einstellbaren Druck mittels einer Flüssigkeit oder eines Gases aufgebracht wird und ergibt zusätzlich die Möglichkeit der prompten, genauen und vollständigen Kompensation sowohl des Gewichts der Manipulatorteile als auch der wechselnd benutzten Werkzeuge. Zur Kompensationssteuerung kann man eine Datenverarbeitungseinrichtung einsetzen, und bei bekanntem Arbeitsablauf die erforderlichen Steuerangaben bereits im voraus festlegen und eingeben.

Ausführungsbeispiele der Erfindung werden im Folgenden anhand von Zeichnungen beschrieben. Es zeigt

Fig. 1 die perspektivische Ansicht einer Manipulatoranordnung mit einer rechnergesteuerten erfindungsgemäßen Kompensationseinrichtung,

Fig. 2A und 2B ein Armsegment mit der Zylinder/Kolben-Anordnung der Kompensationseinrichtung und mit einem Armverbindungsstück in seiner untersten und obersten Position,

Fig. 3A und 3B eine Seitensicht im Teilschnitt und eine Draufsicht der Zylinder/Kolben-Anordnung der Kompensationseinrichtung,

Fig. 4 ein Blockdiagramm der Steueranordnung und der Druckreglerservosteuerung zur Auswahl des jeweiligen Druckes für die Zylinder/Kolben-Anordnung; und

Fig. 5 eine alternative Ausführungsform für die Kombination von Armsegmenten, Armverbindungsstück, Zylinder und Kolben.

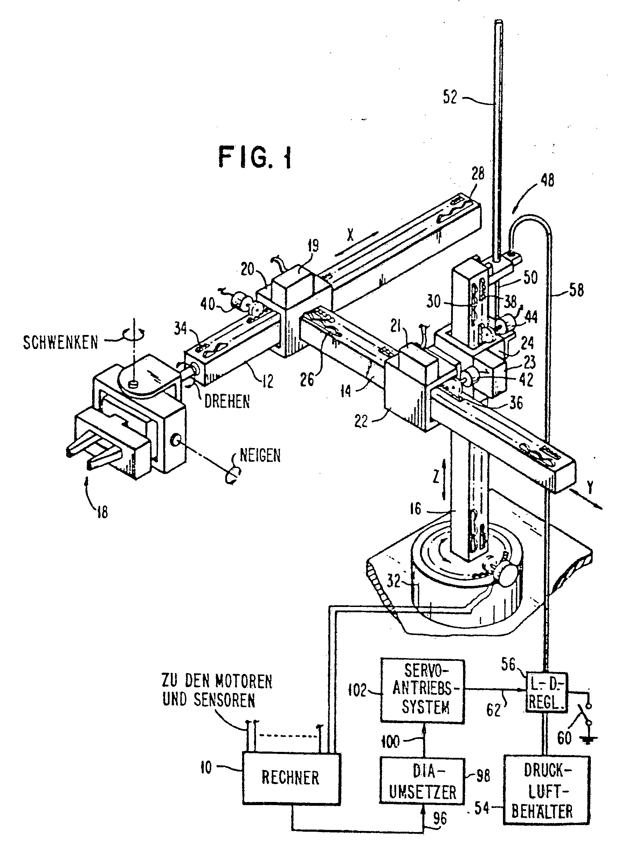

Fig. 1 zeigt einen von einem Rechner (Datenverarbeitungseinrichtung) 10 gesteuerten Manipulator, welcher drei gegeneinander senkrechte Armsegmente 12, 14 und 16 aufweist, durch welche Greiffinger 18 in den drei Koordinatenrichtungen X, Y und Z bewegt werden können. Die Armsegmente 12, 14 und 16 sind durch Verbindungsstücke oder Halter 20, 22 und 24 beweglich miteinander verbunden und bilden so einen Orthogonal-Manipulatorarm ähnlich dem im US-A-4 001 556 beschriebenen.

Die Positioniereinrichtung für Manipulatorhand und -finger umfaßt auch einen Y-Achsen-Antriebsmotor 21 am Verbindungsstück 22, welcher mittels einer Antriebsnockenbahn 26 das Armsegment 14 antreibt, einen X-Achsen-Antriebsmotor 19 am Verbindungsstück 20, welcher mittels einer Antriebsnockenbahn 28 das X-Achsen-Armsegment antreibt, sowie einen Z-Achsen-Antriebsmotor 23 am Verbindungsstück 24, welcher mittels einer Antriebsnockenbahn 30 dieses Verbindungsstück längs dem Z-Achsen-Armsegment bewegt. Die Z-Achsen-Antriebsnockenbahn 30 ist auf dem senkrecht stehenden Armsegment 16 angebracht, dessen unteres Ende an einem drehbaren Fußhalter montiert ist.

Positionssignale, welche die Verschiebung des X-Arms und des Y-Arms sowie des Z-Achsen-Verbindungsstückes durch ihre zugeordneten Motoren 34, 36 und 38 anzeigen, werden durch Potentiometer-Zahnkämme 34, 36 und 38 bewirkt, wobei sich diese Zahnkämme längs der betreffenden Manipulatorarme erstrecken. Potentiometer 40, 42 und 44 sind so montiert, daß ihre Antriebs-Zahnräder mit den entsprechenden Potentiometer-Zahnkämmen im Eingriff sind. Während des Betriebs werden durch die Längsbewegungen der Manipulator-Arme und -Verbindungsstücke sowie der Potentiometer-Zahnkämme die Winkelstellungen der betreffenden Potentiometer-Wellen verändert, wodurch auch das elektrische Ausgangssignal geändert wird. Ein Drei-Koordinaten-Orthogonal-Manipulator mit entsprechendem Motorantrieb und Zahnkammsystem ist beschrieben im US-A-3 848 515. In diesem Patent umfaßt der Antrieb bei jedem der Manipulatorarme einen linearen hydraulischen Motor und eine zyklische Linearparabolische Antriebsnockenbahn, um eine lineare Verschiebung der Arme zu erreichen, wenn mehrere Motorkolben gegen die Nockenbahn wirken.

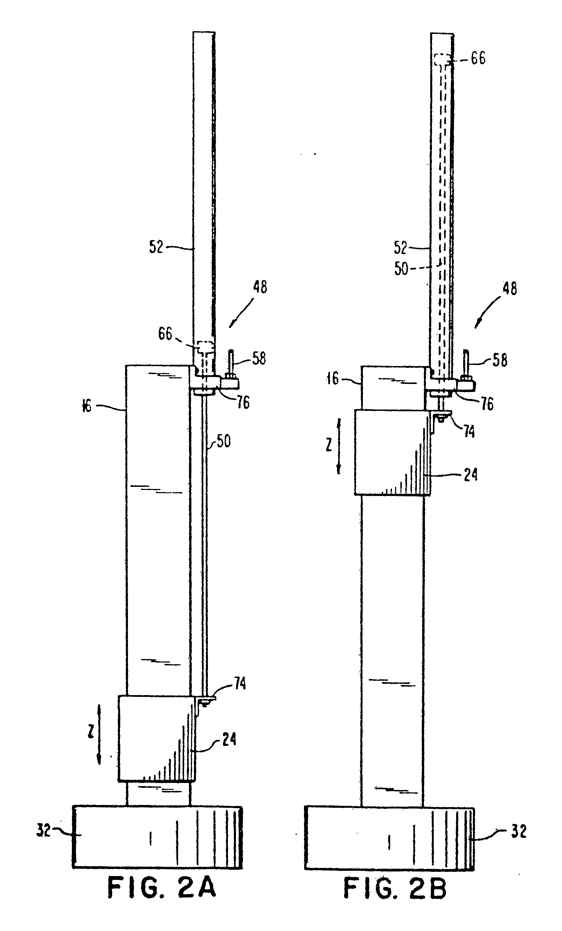

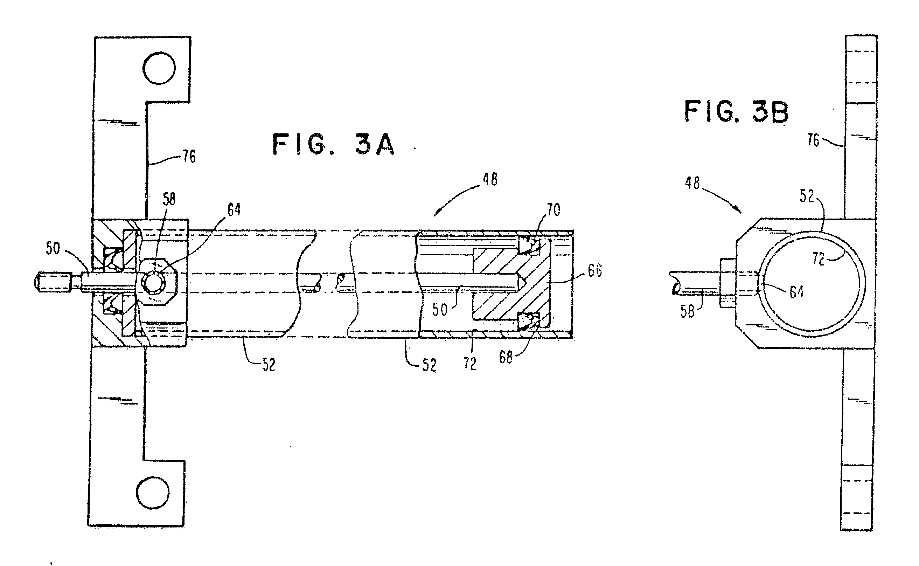

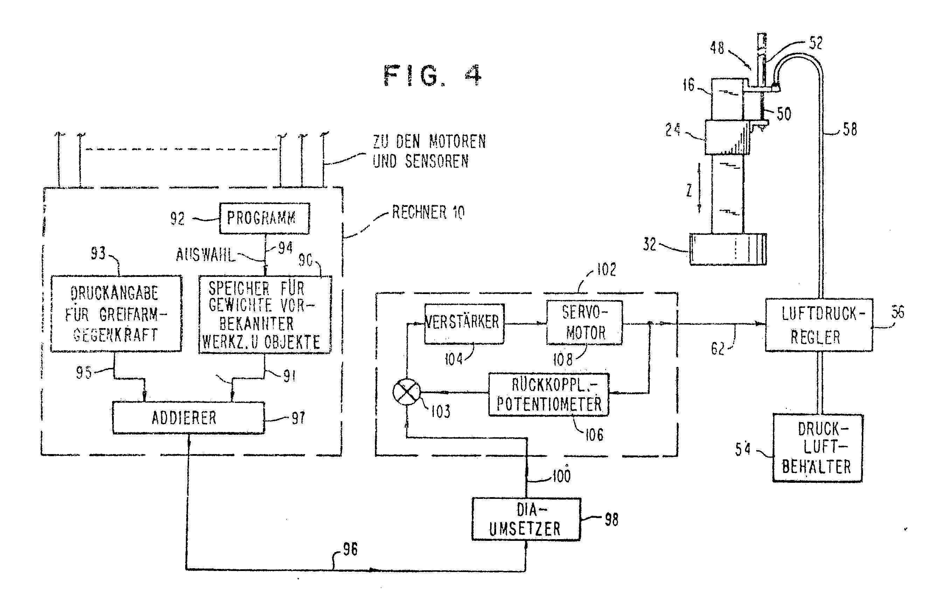

Das in Fig. 1 gezeigte Manipulatorsystem umfaßt auch eine Kolbenstange 50, die an ihrem einen Ende fest am Z-Achsen-Verbindungsstück 24 montiert ist, sowie einen Druckluftzylinder 52, welcher mit der Kolbenstange 50 zusammenwirkt. Die Kolbenstange 50 und der Druckluftzylinder 52 ergeben zusammen eine Pneumatikzylinder-Anordnung 48. Der Druckluftzylinder 52 ist fest mit dem Z-Achsen-Arm 16 verbunden. Ein Druckluftbehälter 54 gibt über einen Luftdruckregler 56 und Druckleitungen 58 Druckluft an die Pneumatikzylinder-Anordnung 48 ab und bewirkt eine aufwärts gerichtete Kraft auf die Kolbenstange 50. Der Luftdruckregler 56 wird vom Rechner 10 über einen D/A-Umsetzer 98 und ein Servoantriebssystem 102, von dem Einzelheiten in Fig. 4 gezeigt sind, programmgesteuert. Weitere Einzelheiten der Pneumatikzylinder-Anordnung 48 werden im Zusammenhang mit Fig. 2A und 2B sowie Fig. 3A und 3B beschrieben.

In Fig. 2A sind der Z-Achsen-Arm 16 und der Druckluftzylinder 52 in einem Zustand gezeigt, bei dem sich das X-Achsen-Verbindungsstück 24 in seiner tiefsten Position befindet, während Fig. 2B die Anordnung zeigt, während sich das Verbindungsstück in seiner obersten Lage befindet. Die Leitung 58 für geregelte Druckluft ist mit einer Öffnung 64 im Druckluftzylinder 52 verbunden (siehe Fig. 3A und 3B), um einen konstanten Druck gegen einen Kolben 66 zu erzeugen, welcher an der Kolbenstange 50 montiert ist. Wie in Fig. 3A und 3B zu sehen ist, weist der Kolben 66 eine Umfangsnut 68 mit einem Dichtungsring 70 auf, durch welchen der Kolben 66 gegen die Innenwand 72 des Druckluftzylinders 52 abgedichtet wird. Der Dichtungsring 70 kann z. B. die übliche U-Form haben.

Aus Fig. 2A und 2B ist ersichtlich, daß die Kolbenstange 50 an ihrem unteren Ende mittels eines Kragstücks 74 mit dem Manipulator-Verbindungsstück 24 verbunden ist, so daß sich die Kolbenstange 50 zusammen mit dem Verbindungsstück 24 vertikal bewegt.

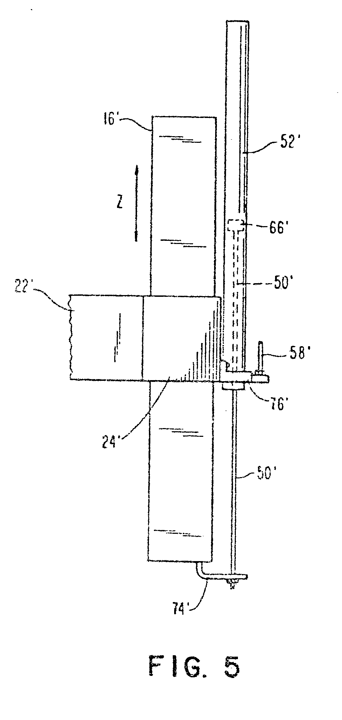

Im bisher beschriebenen Ausführungsbeispiel ist der Z-Achsen-Arm 16 fest montiert, während das Arm-Verbindungsstück 24 durch Antriebsmittel vertikal verschiebbar ist. Es ist aber genauso gut möglich, den Manipulator so zu bauen, daß der Z-Achsen-Arm beweglich, das Z-Achsen-Verbindungsstück dagegen fest montiert ist, wie in Fig. 5 gezeigt. Im Ausführungsbeispiel der Fig. 5 ist der Druckluftzylinder 52' mittels des Kragstücks 76' fest am Z-Achsen-Verbindungsstück 24' montiert, so daß sich die Kolbenstange 50' gemeinsam mit dem Arm 16' bewegt. Bei dieser Alternativausführung bezeichnen die gestrichenen Überweisungszeichen (z. B. 50') die gleichen Funktionselemente wie die ungestrichenen Überweisungszeichen (z. B. 50) in den vorhergehenden Figuren. Die Kolbenstange 50' ist an ihrem unteren Ende mittels des Kragstücks 74' fest verbunden mit dem beweglichen Arm 16'. Das Z-Achsen-Verbindungsstück 24' wird mit Bezug auf den Arm 16' stationär gehalten, wenn der betreffende Antriebsmotor betätigt ist, da der Arm 16' nicht mit irgendeinem festen Objekt, wie z. B. einem Fußhalter 32 gemäß Fig. 1, verbunden ist.

Fig. 4 zeigt ein Blockdiagramm des Programmsteuersystems im Rechner (Datenverarbeitungseinrichtung) 10 und des Servoantriebssystems 102 zur Steuerung des Luftdruckreglers 56 für die Gegenkraft-Pneumatikzylinder-Anordnung 48. Genauer gesagt gibt der Rechner 10 ein Steuersignal zur Einstellung und Steuerung des Luftdruckreglers 56 ab. Dieses Steuersignal wird in der in Fig. 4 im gestrichelten Block 10 gezeigten Anordnung erzeugt. Der Rechner 10 enthält einen Speicher 90, in dem die Gewichte von Werkzeugen und Objekten gespeichert sind, von denen bekannt ist, daß sie im Verlauf eines Montageprogramms ergriffen und manipuliert werden müssen. Zum Montageprogramm 92 gehören verschiedene Daten wie z. B. Positions- und Druckabtastdaten, Arbeitsschritt-Auswahldaten, Ortsangaben, Geschwindigkeitssteuerangaben und Motorantriebsdaten. Das Programm 92 enthält auch die Befehle zum Ergreifen ausgewählter Werkzeuge zu einem oder mehreren Zeitpunkten im Verlaufe eines Montagevorgangs. Vor dem Ergreifen eines bestimmten Objekts oder Werkzeugs gibt das Programm 92 ein Werkzeugauswahlsignal auf Leitung 94 an den Speicher 90 ab, der seinerseits auf Leitung 91 einen Digitalwert abgibt, der das vorbestimmte Gewicht des ausgewählten Werkzeugs oder Objekts darstellt. Das Signal auf Leitung 91 wird an einen Addierer 97 weitergegeben, der außerdem das Ausgangssignal eines Registers 93 auf Leitung 95 empfängt. Im Register 93 ist ein vorbestimmter Druckwert für die Gegenkraft gespeichert, welche zur Kompensation des Gewichts der Greifarmanordnung benötigt wird. Das Signal auf der Ausgangsleitung 96 des Addierers 97 gibt also die richtige Gegenkraft an, welche zur Kompensation sowohl des vorbekannten Werkzeuggewichts als auch des Gewichts der Manipulatorarmanordnung erforderlich ist.

Das Digitalsignal auf der Ausgangsleitung 96 wird mittels eines Digital-Analog-Umsetzers (D/A-Umsetzer) 98 in ein Analogsignal umgewandelt. Die Ausgangsleitung 100 des D/A-Umsetzers 98 ist mit dem Servoantriebssystem 102 verbunden, zu welchem ein Summierer 103, ein Verstärker 104, ein Servomotor 108 und ein Rückkopplungspotentiometer 106 gehören, die in üblicher Servoanordnung miteinander verbunden sind. Die Spannung auf der Leitung 100 zum Summierer 103 dient dazu, den Servomotor 108 über den Verstärker 104 anzutreiben, um die Druckeinstellung des Luftdruckreglers 56 zu steuern, welche durch das Rückkopplungspotentiometer 106 überwacht wird. Wenn die Spannung vom Rückkopplungspotentiometer 106 die Spannung auf der Leitung 100 vom D/A-Umsetzer 98 kompensiert, stoppt der Servomotor 108, wonach der richtige Luftdruck für die Gegenkraft-Pneumatikzylinderanordnung eingestellt ist.

Eine Modifikation der beschriebenen Steuerung ist möglich für Anordnungen, in denen die Manipulatorsegmente nicht nur zueinander senkrechte, sondern auch Winkelbewegungen ausführen. In diesem Fall werden Änderungen der Schwergewichtskräfte, welche durch Armbewegungen mit einem veränderlichen Winkel zur Schwergewichtsachse entstehen, mittels des Programms kompensiert.

**Patentansprüche**

1. Manipulatoranordnung mit einer Greifarmvorrichtung zum Ergreifen von Objekten, und mit einer Einrichtung zur Kompensation der Schwerkraftwirkung, wobei diese Einrichtung zur Kompensation der Schwerkraftwirkung aufweist:

– eine mit der Greifarmvorrichtung (12 . . . 30) in Wirkverbindung stehende Zylinder/Kolben-Anordnung (48) zur hydraulischen oder pneumatischen Erzeugung einer Kraft gegen die auf Greifarmvorrichtung und/oder Objekt wirkende Schwerkraft;
– eine Druckreglereinrichtung (56) zur Abgabe einer Flüssigkeit oder eines Gases mit wählbarem Druck an die Zylinder/Kolben-Anordnung; sowie
– eine Steueranordnung (10, 96, 98, 100, 102) zur Einstellung der Druckreglereinrichtung und damit zur Steuerung der Kraft gemäß dem jeweils zu kompensierenden Gewicht,

dadurch gekennzeichnet, daß die Steueranordnung Speichermittel (90, 92) enthält zur Aufnahme von Angaben über die Kräfte, welche zur Kompensation der Schwerkraftwirkung auf die Greifarmvorrichtung und auf die während eines Arbeitsvorgangs nacheinander zu ergreifenden Objekte erforderlich sind; sowie Mittel (92, 97) zur Auswahl und Abgabe der Angaben für je eine Kombination von Greifarmvorrichtung und Objekt und zur Erzeugung eines entsprechenden Steuersignals für die Druckreglereinrichtung (56).

2. Anordnung nach Patentanspruch 1, dadurch gekennzeichnet, daß die Steueranordnung einen Speicher (90) enthält zur Aufnahme von Gewichtsangaben der in einem Arbeitsvorgang nacheinander zu ergreifenden Objekte, sowie eine Addiereinrichtung (97) zur Addition einer dem Speicher entnommenen Objekt-Gewichts-
angabe und einer vorgegebenen Gegenge-
wichtsangabe für die Greifarmvorrichtung, und
zur Abgabe eines entsprechenden Steuersignals
für die Druckreglereinrichtung (56).

3. Anordnung nach Patentanspruch 1 oder 2,
dadurch gekennzeichnet, daß ein Digital/Analog-Umsetzer (98) vorgesehen ist zur Umwandlung des Steuersignals für die Druckreglereinrichtung von digitaler in analoge Darstellung,
sowie eine an den Ausgang des Digital/Analog-
Umsetzers angeschlossene Servoantriebsanordnung (102) zur Einstellung der Druckreglereinrichtung (56).

4. Anordnung nach Patentanspruch 3, dadurch
gekennzeichnet, daß die Servoantriebsanordnung (102) einen Summierer (103) enthält,
dessen erster Eingang mit dem Ausgang des
Digital/Analog-Umsetzers (98) verbunden ist;
einen mit dem Ausgang des Summierers
verbundenen Verstärker (104); einen mit dem
Ausgang des Verstärkers verbundenen Servomotor (108) zur Einstellung der Druckreglereinrichtung (56), sowie ein mit dem Servomotor
verbundenes Rückkopplungs-Potentiometer
(106) zur Abgabe einer die Einstellung der
Druckreglereinrichtung darstellenden Rückkopplungsspannung an den zweiten Eingang des
Summierers.

**Claims**

1. Manipulator apparatus comprising an arm
assembly for grasping objects, and means for
comepensating gravity forces, said means for
compensating gravity forces including:

- cylinder/piston means (48) being in operational connection with said arm assembly
(12 ... 30), for generating hydraulically or
pneumatically a force against the gravity
forces acting upon arm assembly and/or
object;
- pressure regulating means (56) for furnishing to said cylinder/piston means a fluid
or a gas having a selectable pressure; and
- control means (10, 96, 98, 100, 102) for
setting said pressure regulating means and
thereby controlling said force in accordance
with the weight to be compensated.

characterized in that said control means include
storage means (90, 92) for recording data on the
forces which are required for compensating the
effect of gravity upon said arm assembly and
upon the objects to be grasped during a working
process; and further include means (92, 97) for
selecting and furnishing the data for one
combination of arm assembly and object at a
time, and for generating a respective control
signal for said pressure regulation means (56).

2. Apparatus in accordance with claim 1,
characterized in that said control means include
a storage (90) for recording of weight data for
the objects to be sequentially grasped during a
working process, and adding means (97) for
adding the weight datum of an object, obtained
from said storage, and a predetermined counter
weight datum for said arm assembly, and for
furnishing a respective control signal for said
pressure regulating means (56).

3. Apparatus in accordance with claim 1 or 2,
characterized in that a digital-to-analog converter (98) is provided for converting the control
signal for said pressure regulating means from
digital representation, and servo drive means
(102) connected to the output of said digital-to-
analog converter for setting said pressure
regulating means (56).

4. Apparatus in accordance with claim 3,
characterized in that said servo drive means
(102) comprises a summing device (103) the first
input of which is connected to the output of the
digital-to-analog converter (98); an amplifier
(104) connected to the output of said summing
device; a servo motor (108) connected to the
output of said amplifier for setting the pressure
regulating means (56); and a feedback potentiometer (106) connected to said servo motor for
furnishing, to a second input of said summing
device, a feedback voltage representing the
setting of said pressure regulating device.

**Revendications**

1. Manipulateur pourvu d'un dispositif à bras à
griffes permettant de saisir des objets et de
moyens servant à compenser l'effet de gravitation, lesdits comprenant:

comprenant:

un moyen à cylindre/piston (48) fonctionnant en liaison avec le dispositif de bras à
griffes (12, 30), destiné à la génération
hydraulique ou pneumatique d'une force
s'exerçant à l'encontre des forces de gravité
agissant sur le dispositif à bras à griffes
et/ou sur l'objet,
un moyen régulateur de pression (56) pour
fournir au moyen à cylindre/piston, un
liquide ou d'un gaz à pression sélectionnable; et
un moyen de commande (10, 96, 98, 100, 102)
pour le réglage du moyen régulateur de
pression, et de ce fait, pour la commande de
la force conformément au poids à compenser dans chaque cas; caractérisé en ce que:

le moyen de commande contient un moyens
d'emmagasinage (90, 92) pour le stockage de
données concernant les forrces nécessaires à la
compensation de l'effet de gravitation agissant
sur le dispositif à bras à griffes et sur les objets
devant être saisis au cours d'un cycle de travail,
ainsi qu'un moyen (92, 97) pour la sélection et la
transmission des informations concernant respectivement une combinaison de dispositif à bras à griffres et d'objets et pour la génération d'un signal de commande approprié pour le moyen régulateur de pression (56).

2. Manipulateur selon la revendication 1, caractérisé en ce que le moyen de commande comporte une mémoire (90) pour ammagasiner les données de poids des objets devant être saisis successivement au cours d'un cycle de travail, ainsi qu'un moyen d'addition (97) pour l'addition d'une donnée de poids d'un objet, prélevée de la mémoire, et d'une donnée de contrepoids prédéterminée pour le dispositif à bras à griffes, et pour la transmission d'un signal de commande correspondant pour le moyen régulateur de pression (56).

3. Manipulateur selon l'une des revendications 1 ou 2, caractérisé en ce qu'un convertisseur numérique/analogique (98) est prévu pour le conversion du signal de commande pour le moyen régulateur de pression, de la représentation numérique en représentation analogique, ainsi qu'un moyen d'entraînement asservi (102) couplé à la sortie du convertisseur numérique/analogique pour le réglage du moyen régulateur de pression (56).

4. Manipulateur selon la revendication 3, caractérisé en ce que le moyen d'entraînement asservi (102) contient un totalisateur (103) dont la première entrée est reliée à la sortie du convertisseur numérique/analogique (98), un amplificateur (104) relié à la sortie du totalisateur, un servo-moteur (108) relié à la sortie de l'amplificateur pour le réglage du moyen régulateur de pression (56), ainsi qu'un potentiomètre de réaction (106) relié au servo-moteur pour l'application, à la seconde entrée du totalisateur d'une tension de réaction représentant le réglage du moyen régulateur de pression.

FIG. 1

FIG. 2A          FIG. 2B

FIG. 3A

FIG. 3B

0 016 330

# FIG. 4

ZU DEN MOTOREN
UND SENSOREN

92 — PROGRAMM

RECHNER 10

AUSWAHL 94 90

93
DRUCKANGABE
FÜR GREIFARM-
GEGENKRAFT

SPEICHER FÜR
GEWICHTE VOR-
BEKANNTER
WERKZ.U OBJEKTE

95

91

ADDIERER — 97

102

VERSTÄRKER

SERVO-
MOTOR

104

108

103

RÜCKKOPPL.-
POTENTIOMETER

106

100

96

DIA-
UMSETZER — 98

48

52

16

50

24

58

Z

32

LUFTDRUCK-
REGLER — 36

62

54

DRUCK-
LUFT-
BEHÄLTER

0 016 330

13

FIG. 5